# EUROPÄISCHE PATENTANMELDUNG

(11) **EP 4 495 341 A1**
(43) Veröffentlichungstag der Anmeldung: **22.01.2025**
(21) Anmeldenummer: 24186987.4
(22) Anmeldetag: 08.07.2024
(51) Int. Cl.: E03C 1/02, F16L 19/02, F16L 19/025

(54) **VORRICHTUNG ZUM ANSCHLUSS EINER WASSERLEITUNG AN EINEM EINEN DURCHGANG AUFWEISENDEN BAUTEIL**

(30) Priorität: 19.07.2023 DE 102023119017
(71) Anmelder: Viega Technology GmbH & Co. KG, 57439 Attendorn (DE)
(72) Erfinder: Schulte, Philipp, 57368 Lennestadt (DE)
(74) Vertreter: Cohausz & Florack

(57) **Zusammenfassung**

Die Erfindung betrifft eine Vorrichtung zum Anschluss einer Wasserleitung (2) an einem einen Durchgang aufweisenden Bauteil (1), insbesondere einer Armatur zum Verändern und/oder Steuern eines Wasserstroms, mit einem einen Durchgangskanal (30) zur Durchleitung von Wasser in Richtung Bauteil aufweisenden Anschlussstück (3), wobei das Anschlussstück ein mit dem Bauteil zu verbindendes erstes Ende (3.1), ein mit der Wasserleitung zu verbindendes zweites Ende (3.2) und einen zwischen dem ersten Ende und dem zweiten Ende ausgebildeten nach außen vorstehenden Anschlag (3.3) in Form eines Bundes oder Flansches aufweist, wobei das erste Ende (3.1) des Anschlussstücks (3) auf seiner Außenseite mit einer Ringnut (3.11) versehen oder als Tülle zur Aufnahme eines Dichtungsrings ausgebildet ist, wobei in der Ringnut (3.11) oder auf der Tülle vorzugsweise ein Dichtungsring angeordnet ist, und mit einem Befestigungselement (6, 6') zur Befestigung des Anschlussstücks (3) an dem Bauteil (1), wobei an dem Befestigungselement mindestens ein hinter den Anschlag (3.3) greifender Vorsprung (6.1) ausgebildet ist, wobei der Anschlag (3.3) eine Anschlagsfläche (3.31) definiert, die bei der Befestigung des Anschlussstücks an dem Bauteil mit einer Sitzfläche (1.11) des Bauteils zusammenwirkt, indem sie eine Position des Anschlussstücks (3) relativ zu dem Bauteil (1) definiert. Die erfindungsgemäße Vorrichtung ist dadurch gekennzeichnet, dass der Anschlag (3.3) oder die dem Anschlag zugewandte Sitzfläche (1.11) mindestens eine Ausnehmung (3.32) oder Erhebung aufweist, mittels der ein ringförmig-geschlossener Flächenkontakt zwischen der Anschlagsfläche (3.31) des Anschlags (3.3) und der Sitzfläche (1.11) unterbrochen oder verhindert wird. Hierdurch wird eine aufgrund eines beschädigten oder fehlenden Dichtungsrings vorliegende Undichtigkeit bei Inbetriebnahme der Vorrichtung sichtbar gemacht, so dass erforderlichenfalls durch Einsetzen eines einwandfreien Dichtungsrings die Undichtigkeit beseitigt werden kann.

## Beschreibung

Die Erfindung betrifft eine Vorrichtung zum Anschluss einer Wasserleitung an einem einen Durchgang aufweisenden Bauteil, insbesondere an einer Armatur zum Verändern und/oder Steuern eines Wasserstroms, mit einem einen Durchgangskanal zur Durchleitung von Wasser in Richtung Bauteil aufweisenden Anschlussstück, wobei das Anschlussstück ein mit dem Bauteil zu verbindendes erstes Ende, ein mit der Wasserleitung zu verbindendes zweites Ende und einen zwischen dem ersten Ende und dem zweiten Ende des Anschlussstücks ausgebildeten, nach außen vorstehenden Anschlag in Form eines Bundes oder Flansches aufweist, wobei das erste Ende des Anschlussstücks auf seiner Außenseite mit einer Ringnut versehen oder als Tülle zur Aufnahme eines Dichtungsrings ausgebildet ist, wobei in der Ringnut oder auf der Tülle vorzugsweise ein Dichtungsring angeordnet ist, und mit einem Befestigungselement zur Befestigung des Anschlussstücks an dem Bauteil, wobei an dem Befestigungselement mindestens ein hinter den Anschlag greifender Vorsprung ausgebildet ist, und wobei der Anschlag eine Anschlagsfläche definiert, die bei der Befestigung des Anschlussstücks an dem Bauteil mit einer Sitzfläche des Bauteils zusammenwirkt, indem sie eine Position des Anschlussstücks relativ zu dem Bauteil definiert.

Zum Anschluss von Wasserleitungen an einen Durchgang aufweisenden Bauteilen, insbesondere an Armaturen zum Verändern und/oder Steuern eines Wasserstroms, beispielsweise Eckventile oder Einhebelmischer-Armaturen, sind zahlreiche Ausführungsformen bekannt.

Armaturenkörper von Einhebelmischern für Waschbecken weisen üblicherweise Anschlussbohrungen mit Innengewinde auf, in das ein am Ende einer flexiblen Wasserleitung angeordneter Schraubnippel eingeschraubt wird. Eine solche Wasserleitung ist typischerweise als sogenannter Panzerschlauch ausgeführt. Das andere Ende der flexiblen Wasserleitung wird dabei üblicherweise mit einem Eckventil verbunden. Das Eckventil weist hierzu einen Stecksitz auf, in den ein am Ende der flexiblen Wasserleitung angeordneter Stecknippel eingesteckt wird. Zur Befestigung (Sicherung) des Stecknippels an dem Eckventil ist der Stecksitz üblicherweise mit einem Außengewinde versehen, auf das eine Überwurfmutter aufgeschraubt wird, die hinter einen als Flansch oder Bund ausgebildeten Anschlag des Stecknippels greift. Damit diese Verbindung wasserdicht ist, ist der Stecknippel an seiner Außenseite mit einem O-Ring oder einer Flachringdichtung versehen, wobei der O-Ring in eine Ringnut eingesetzt ist, die in der Außenfläche des Stecknippels ausgebildet ist; im Unterschied dazu liegt eine Flachringdichtung an der dem Stecksitz zugewandten Anschlagsfläche des als Flansch oder Bund ausgebildeten Anschlags an.

Derartige Verbindungen einer flexiblen Wasserleitung bzw. Anschlussvorrichtungen zum Anschluss einer Wasserleitung an einem einen Durchgang aufweisenden Bauteil, insbesondere mit bzw. an einem Eckventil oder Füllventil, sind auch bei WC-Spülkästen bekannt (vgl. z.B. EP 0 731 230 A2).

Bei einem aus der WO 2020/178062 A1 bekannten Spülkasten ist die Verbindung eines Eckventils mit einem Panzerschlauch als Stecksitz-Verbindung mit Überwurfmutter und O-Ring im Spülkasten ausgeführt.

Eine derartige Verbindung kann bei fehlendem O-Ring oder mit beschädigtem O-Ring durch festes Anziehen der Überwurfmutter gleichwohl wasserdicht sein, da der üblicherweise aus Kunststoff hergestellte Stecknippel mit seinem als Bund ausgebildeten Anschlag flach auf der ringförmigen Stirnseite des Stecksitzes des Eckventils, welches üblicherweise aus Messing hergestellt ist, aufliegt. Jedoch hat sich gezeigt, dass eine solche fehlerhafte Verbindung nur kurzzeitig und nicht dauerhaft wasserdicht ist. Bei solchen fehlerhaften Verbindungen kann es, insbesondere bei Anordnung der Verbindung innerhalb eines sanitären Spülkastens, zu stark spritzendem Wasser und dadurch zu Wasserschäden beim Endkunden kommen.

Davon ausgehend liegt der Erfindung die Aufgabe zugrunde, eine Verbindung bzw. Vorrichtung der eingangs genannten Art dahingehend zu verbessern, dass bei ihr die Gefahr einer Undichtigkeit bzw. eines Wasserschadens verringert oder weitestgehend verhindert wird.

Gelöst wird diese Aufgabe durch eine Vorrichtung mit den in Anspruch 1 angegebenen Merkmalen.

Zur Lösung der Aufgabe sieht die Erfindung bei einer Vorrichtung der eingangs genannten Art vor, dass der Anschlag oder die dem Anschlag zugewandte Sitzfläche des Bauteils mindestens eine Ausnehmung oder Erhebung aufweist, mittels der ein ringförmig-geschlossener Flächenkontakt zwischen der Anschlagsfläche des Anschlags und der Sitzfläche des Bauteils unterbrochen oder verhindert wird.

Die Erfindung basiert auf der Idee, eine aufgrund eines beschädigten oder fehlenden Dichtungsrings vorliegende Undichtigkeit der Vorrichtung in jedem Montagefall bei Inbetriebnahme einer solchen Vorrichtung gut wahrnehmbar, vorzugsweise sichtbar zu machen, so dass erforderlichenfalls durch Einsetzen eines einwandfreien Dichtungsrings die Undichtigkeit beseitigt und ein Wasserschaden verhindert werden kann.

Eine vorteilhafte Ausgestaltung der Erfindung ist dadurch gekennzeichnet, dass die mindestens eine Ausnehmung in dem Anschlag ausgebildet ist, wobei die Ausnehmung in Form eines Spaltes ausgebildet ist, der sich ausgehend von einer Außenkante des Anschlags bis zu einer umlaufenden Außenfläche des ersten Endes des Anschlussstücks erstreckt oder mit radialem Abstand zu dieser Außenfläche endet, wobei diese Außenfläche mit dem Anschlag eine Kehle definiert, und wobei der gegebenenfalls vorhandene radiale Abstand weniger als 3 mm, vorzugsweise weniger als 2 mm, besonders bevorzugt weniger als 1 mm beträgt. Vorzugsweise endet die mindestens eine Ausnehmung im Bereich des Ringspalts, den das mit dem Bauteil, beispielsweise einer Armatur zum Verändern und/oder Steuern eines Wasserstroms, zu verbindende (erste) Ende des Anschlussstücks und die dem Anschlag des Anschlussstücks zugewandte Sitzfläche des Bauteils begrenzen.

Die mindestens eine Ausnehmung lässt sich einfach und kostengünstig herstellen. Beispielsweise kann sie während eines Spritzgießprozesses zur Herstellung des Anschlussstücks in dessen Anschlag ausgebildet werden. Alternativ kann die mindestens eine Ausnehmung in dem Anschlag nachträglich durch Materialentfernen, z. B. Ausschneiden oder Ausfräsen, erzeugt werden. Die Abmessungen der mindestens einen Ausnehmung lassen sich dabei variabel wählen bzw. hinsichtlich einer gewollt guten Erkennbarkeit einer durch Fehlen des Dichtungsrings verursachten Undichtigkeit einfach anpassen.

Das zweite Ende des Anschlussstücks ist vorzugsweise mit einer Wasserleitung in Form eines Schlauchs, beispielsweise eines sogenannten Panzerschlauchs verbunden. Panzerschläuche sind aus einem mit rostfreiem Drahtgeflecht ummantelten Kunststoff- oder Gummischlauch aufgebaut, wobei das Drahtgeflecht als mechanischer Schutz für den Kunststoff- oder Gummischlauch dient.

Das Anschlussstück der erfindungsgemäßen Vorrichtung wird vorzugsweise aus Kunststoff gefertigt. Es liegt aber auch im Rahmen der Erfindung, dass das Anschlussstück aus Metall, z. B. Messing gefertigt wird. Das mit einer Wasserleitung zu verbindende (zweite) Ende des Anschlussstücks weist auf seiner Außenseite vorzugsweise ein Sägezahnprofil auf. Dieses (zweite) Ende des Anschlussstücks kann auch als Schlauchstutzen oder Schlauchnippel bezeichnet werden. Das Ende der vorzugsweise als Schlauch ausgeführten Wasserleitung wird auf besagtem Ende (Schlauchnippel) des Anschlussstücks mittels einer Klammer oder plastisch verformbaren Presshülse kraftschlüssig gesichert, wobei die Klammer oder umgeformte Presshülse das aufgesteckte Ende der Wasserleitung wasserdicht gegen das Sägezahnprofil presst.

Nach einer weiteren Ausgestaltung der erfindungsgemäßen Vorrichtung weist das mit der Wasserleitung zu verbindende Ende des Anschlussstücks zwischen dem Sägezahnprofil und dem in Form eines Bundes oder Flansches ausgebildeten Anschlag, der von dem Befestigungselement zur Befestigung des Anschlussstücks an dem einen Durchgang aufweisenden Bauteil bzw. an der Armatur hintergriffen wird, einen von dem Anschlag axial beabstandeten radialen Vorsprung auf. Der Vorsprung dient als axialer Anschlag für die auf das Anschlussstück aufgeschobene Wasserleitung (Schlauchleitung) und/oder als Formschlusselement zur axialen Festlegung der plastisch umgeformten Presshülse. Der Vorsprung ist vorzugsweise als umlaufender Vorsprung, beispielsweise in Form einer umlaufenden Rippe ausgebildet.

Nach einer weiteren Ausgestaltung der Erfindung erstreckt sich der mindestens eine Spalt vorzugsweise über die gesamte axiale Dicke des Anschlags. Hierdurch lässt sich bei fehlendem oder beschädigtem Dichtungsring ein kurzer Strömungsweg (Leckageweg) für aufgrund des fehlenden oder beschädigten Dichtungsrings austretendes Leckagewasser in Richtung Außenseite der angeschlossenen Wasserleitung erzielen. Ein kurzer, konzentrierter Strömungsweg des gegebenenfalls austretenden Leckagewassers kann die Austrittsintensität, z. B. eine Wasserstrahlintensität, und damit die Wahrnehmbarkeit, insbesondere Sichtbarkeit des aufgrund des fehlenden oder beschädigten Dichtungsrings austretenden Leckagewassers erhöhen bzw. verbessern.

Nach einer weiteren Ausgestaltung der Erfindung weist der Spalt ein V-förmiges oder U-förmiges Querschnittsprofil und/oder einen abgeflachten Spaltgrund auf. Auch diese Ausgestaltung trägt zu einer guten Erkennbarkeit von Leckagewasser, welches bei fehlendem oder beschädigtem Dichtungsring austritt, bei.

Eine weitere oder alternative Ausgestaltung der Erfindung ist dadurch gekennzeichnet, dass die mindestens eine Erhebung auf der dem Bauteil bzw. der Armatur zugewandten Anschlagsseite des Anschlags ausgebildet ist. Die mindestens eine Erhebung lässt sich einfach und kostengünstig auf dem Anschlag ausbilden. Beispielsweise kann die mindestens eine Erhebung während eines Spritzgießprozesses zur Herstellung des Anschlussstücks auf dessen Anschlag ausgebildet werden. Alternativ kann die Erhebung nachträglich an dem Anschlag durch Materialauftrag, Anschweißen oder Ankleben oder plastisches Umformen erzeugt werden. Die Abmessungen der mindestens einen Erhebung lassen sich dabei variabel wählen bzw. hinsichtlich einer gewollt guten Wahrnehmbarkeit einer durch Fehlen des Dichtungsrings verursachten Undichtigkeit einfach anpassen.

Nach einer weiteren Ausgestaltung der Erfindung ist die Erhebung in Form mindestens einer Rippe oder Verdickung ausgebildet. Die Verdickung kann dabei beispielsweise in Form eines zylindrischen oder zahnförmigen, insbesondere kegelstumpf-, pyramidenstumpf- oder kalottenförmigen Vorsprungs ausgeführt sein.

Eine weitere Ausgestaltung der Erfindung sieht vor, dass die mindestens eine Erhebung länglich ausgebildet ist und sich auf dem Anschlag radial erstreckt. Hierdurch lässt sich ebenfalls in zuverlässiger Weise erreichen, dass ein ringförmig-geschlossener Flächenkontakt zwischen dem Anschlag des Anschlussstücks und der Sitzfläche der Sanitärarmatur unterbrochen oder verhindert wird.

Eine weitere Ausgestaltung der Erfindung ist dadurch gekennzeichnet, dass die mindestens eine Ausnehmung in dem Anschlag ausgebildet ist, wobei die Ausnehmung in Form eines Durchgangslochs ausgebildet ist, das sich über die gesamte axiale Dicke des Anschlags erstreckt. Durch diese Ausgestaltung lässt sich bei fehlendem oder beschädigtem Dichtungsring ebenfalls ein kurzer Strömungsweg (Leckageweg) für aufgrund des fehlenden oder beschädigten Dichtungsrings austretendes Leckagewasser in Richtung Außenseite der angeschlossenen Wasserleitung erzielen. Ein kurzer, konzentrierter Strömungsweg des gegebenenfalls austretenden Leckagewassers kann die Austrittsintensität, z. B. eine Wasserstrahlintensität, und damit die Wahrnehmbarkeit des Leckagewassers erhöhen bzw. verbessern. Das mindestens eine Durchgangsloch kann beispielsweise als Bohrung ausgeführt sein.

Eine weitere Ausgestaltung der erfindungsgemäßen Vorrichtung sieht vor, dass das mindestens eine Durchgangsloch unmittelbar oder mit Abstand an einer umlaufenden Außenfläche des ersten Endes des Anschlussstücks angrenzt, wobei diese Außenfläche mit dem Anschlag eine neben dem Durchgangsloch liegende Kehle definiert, und wobei der gegebenenfalls vorhandene Abstand weniger als 3 mm, vorzugsweise weniger als 2 mm, besonders bevorzugt weniger als 1 mm beträgt. Hierdurch lässt sich das Durchgangsloch bei kompakten Abmessungen der erfindungsgemäßen Vorrichtung mit ausreichend großem bzw. vorteilhaftem Lochquerschnitt realisieren. Vorzugsweise endet das mindestens eine Durchgangsloch im Bereich des Ringspalts, den das mit dem Bauteil bzw. der Armatur zu verbindende (erste) Ende des Anschlussstücks und ein dieses Ende umgebender Abschnitt des Bauteils bzw. der Armatur begrenzen.

Nach einer weiteren oder alternativen Ausgestaltung der Erfindung ist die mindestens eine Ausnehmung in der dem Anschlag zugewandten Sitzfläche des Bauteil bzw. der Armatur ausgebildet, wobei die Ausnehmung in Form einer Nut ausgebildet ist, die sich ausgehend von einem Außenumfang der Sitzfläche einwärts bis zu einem Innenumfang der Sitzfläche erstreckt. Auch durch diese Ausgestaltung lässt sich in zuverlässiger Weise erreichen, dass ein ringförmig-geschlossener Flächenkontakt zwischen der Anschlagsfläche des Anschlags des Anschlussstücks und der Sitzfläche des Bauteils bzw. der Armatur unterbrochen oder verhindert wird.

Eine weitere oder alternative Ausgestaltung der Erfindung sieht vor, dass die mindestens eine Erhebung auf der dem Anschlag zugewandten Sitzflächenseite des Bauteils bzw. der Armatur ausgebildet ist. Die mindestens eine Erhebung kann dabei ebenfalls als Rippe oder Verdickung ausgebildet sein, beispielsweise in Form eines zylindrischen oder zahnförmigen, insbesondere kegelstumpf-, pyramidenstumpf- oder kalottenförmigen Vorsprungs auf der Sitzflächenseite des Bauteils bzw. der Armatur.

Eine weitere Ausgestaltung der erfindungsgemäßen Vorrichtung sieht vor, dass das erste Ende des Anschlussstücks als Stecknippel ausgebildet ist. Der Stecknippel weist dabei an seinem Einführende (Stirnende) vorzugsweise eine umlaufende Fase am Außenumfang auf. Die dem Stecknippel zugeordnete Aufnahme des Bauteils bzw. der Armatur mündet an der dem Anschlag des Anschlussstücks zugewandten Sitzfläche des Bauteils bzw. der Armatur, wobei die Aufnahme vorzugsweise einen kreiszylindrischen Axialabschnitt (Innenabschnitt) und einen sich daran anschließenden, in Richtung der Sitzfläche konisch zunehmenden Mündungsabschnitt aufweist.

Nach einer weiteren bevorzugten Ausgestaltung der erfindungsgemäßen Vorrichtung ist das Befestigungselement zur Befestigung des Anschlussstücks an dem Bauteil bzw. der Armatur als Überwurfmutter ausgeführt. Mittels einer Überwurfmutter lässt sich das Anschlussstück sehr zuverlässig und komfortabel an einem ein entsprechendes Außengewinde aufweisenden Bauteil bzw. einer derartigen Armatur befestigen und bei Bedarf, z. B. zu Reparatur- oder Wartungszwecke, von dem Bauteil bzw. der Armatur lösen.

Anstelle einer Überwurfmutter kann bei der erfindungsgemäßen Vorrichtung aber auch ein anderes Befestigungselement zur Befestigung des Anschlussstücks an dem Bauteil bzw. der Armatur vorgesehen sein. Beispielsweise kann das Befestigungselement alternativ auch als Rastelement, insbesondere als Rasthaken oder Rastvorsprünge aufweisendes Sicherungselement ausgeführt werden. Ein Anschluss einer Wasserleitung an einem einen Durchgang aufweisenden Bauteile, insbesondere an einer Armatur, die einen Stecksitz mit einem solchen Rastelement bzw. Sicherungselement aufweist, ist beispielsweise in der EP 1 457 727 A2 oder der DE 20 2011 109 992 U1 offenbart. Der Offenbarungsgehalt dieser Dokumente wird in vollem Umfang in die Offenbarung der vorliegenden Anmeldung einbezogen.

Die erfindungsgemäße Vorrichtung ist insbesondere für eine Armatur zum Verändern und/Steuern eines Wasserstroms bestimmt, bei der es sich beispielsweise um ein Ventil, vorzugsweise ein Eckventil oder ein Füllventil für einen Spülkasten handelt. Die oben genannte Sitzfläche des Bauteils bzw. der Armatur ist dabei vorzugsweise an der Stirnseite eines Stecksitzes (Anschlussstutzens) zur Aufnahme des Anschlussstücks ausgebildet. Alternativ kann ein solches Bauteil bzw. eine solche Armatur auch Teil der erfindungsgemäßen Vorrichtung sein.

Nachfolgend wird die Erfindung anhand einer mehrere Ausführungsbeispiele darstellenden Zeichnung näher erläutert. Es zeigen:
- Fig. 1a: ein Bauteil in Form eines Eckventils mit einer daran unter Verwendung eines Anschlussstücks gemäß Stand der Technik angeschlossenen Wasserleitung, in perspektivischer Darstellung;
- Fig. 1b: das Bauteil (Eckventil) aus Fig. 1 mit der daran unter Verwendung des Anschlussstücks und eines Dichtungsrings angeschlossenen Wasserleitung, in einer axialen Teilschnittansicht;
- Fig. 1c: das Bauteil gemäß Fig. 1b, jedoch ohne Dichtungsring;
- Fig. 2a: ein Bauteil (Eckventil) entsprechend Fig. 1a mit einer daran unter Verwendung eines erfindungsgemäßen Anschlussstücks angeschlossenen Wasserleitung, in perspektivischer Darstellung;
- Fig. 2b: das Bauteil aus Fig. 2a mit der daran unter Verwendung des erfindungsgemäßen Anschlussstücks angeschlossenen Wasserleitung, ohne Dichtungsring, in einer axialen Teilschnittansicht;
- Fig. 3: das Bauteil entsprechend Fig. 2b mit einer daran unter Verwendung eines nach einem zweiten Ausführungsbeispiel ausgeführten erfindungsmäßen Anschlussstücks angeschlossenen Wasserleitung, in einer axialen Teilschnittansicht;
- Fig. 4: das Bauteil (Eckventil) entsprechend Fig. 2b mit einer daran unter Verwendung eines nach einem dritten Ausführungsbeispiel ausgeführten erfindungsmäßen Anschlussstücks angeschlossenen Wasserleitung, in einer axialen Teilschnittansicht;
- Fig. 5: das Bauteil entsprechend Fig. 2b mit einer daran unter Verwendung eines nach einem vierten Ausführungsbeispiel ausgeführten erfindungsmäßen Anschlussstücks angeschlossenen Wasserleitung, in einer axialen Teilschnittansicht;
- Fig. 6: ein nach einem fünften erfindungsmäßen Ausführungsbeispiel ausgeführtes Bauteil, z.B. Eckventil, mit einer daran unter Verwendung eines herkömmlichen Anschlussstücks angeschlossenen Wasserleitung, in einer axialen Teilschnittansicht; und
- Fig. 7: ein nach einem sechsten erfindungsmäßen Ausführungsbeispiel ausgeführtes Bauteil, z.B. Eckventil, mit einer daran unter Verwendung eines herkömmlichen Anschlussstücks angeschlossenen Wasserleitung, in einer axialen Teilschnittansicht.

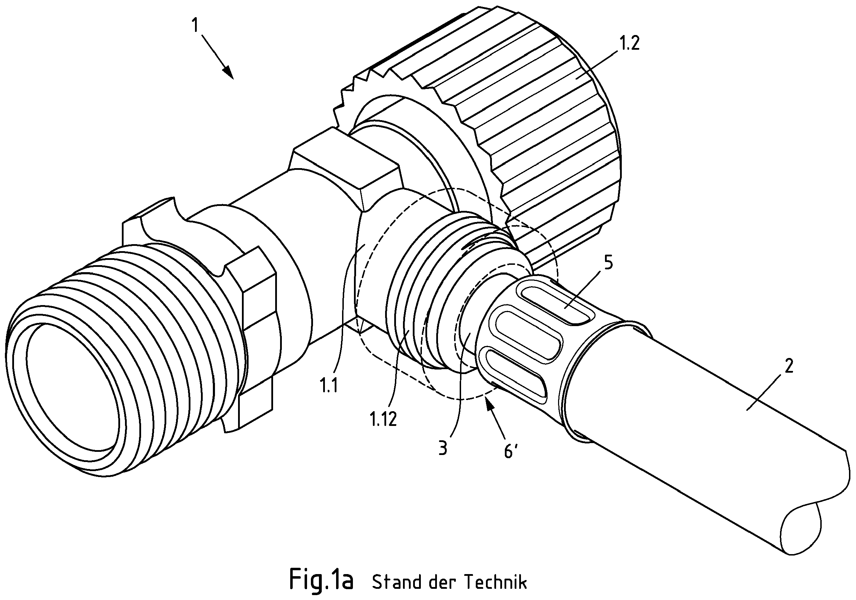

In den Figuren 1a bis 1c ist ein einen Durchgang aufweisendes Bauteil 1, und zwar eine Armatur zum Verändern und/oder Steuern eines Wasserstroms dargestellt. Bei der Armatur bzw. dem Bauteil 1 handelt es sich beispielsweise um ein Eckventil für einen sanitären Spülkasten, z.B. WC-Spülkasten. Das Eckventil weist einen Anschlussstutzen 1.1 für eine Wasserleitung 2 auf. Bei der Wasserleitung 2 handelt es sich beispielsweise um eine Schlauchleitung, vorzugsweise einen Panzerschlauch. Mit 1.2 ist ein Drehgriff des Eckventils markiert.

Zum Anschluss der Wasserleitung 2 an das Eckventil ist ein Anschlussstück 3 vorgesehen, das einen Durchgangskanal 30 zur Durchleitung von Wasser in Richtung Eckventil aufweist. Das Anschlussstück 3 umfasst ein mit dem Eckventil bzw. dessen Anschlussstutzen 1.1 zu verbindendes erstes Ende 3.1, ein mit der Wasserleitung 2 zu verbindendes zweites Ende 3.2 und einen zwischen dem ersten Ende 3.1 und dem zweiten Ende 3.2 ausgebildeten, nach außen vorstehenden Anschlag 3.3 in Form eines Bundes oder Flansches. Das erste Ende 3.1 des Anschlussstücks wird in den Anschlussstutzen 1.1 der Armatur bzw. des Bauteils 1 eingesteckt. Das Anschlussstück 3 kann auch als Anschlussnippel bezeichnet werden. Es ist üblicherweise aus Kunststoff gefertigt.

Das in den Anschlussstutzen 1.1 der Armatur bzw. des Bauteils einsteckbare erste Ende 3.1 des Anschlussstücks 3 ist auf seiner Außenseite mit einer Ringnut 3.11 zur Aufnahme eines Dichtungsrings (z.B. eines sogenannten O-Rings) 4 versehen. Bei anderen bekannten Vorrichtungen zum Anschluss einer Wasserleitung 2, insbesondere einer Schlauchleitung, an einer Armatur bzw. einem Bauteil 1 ist das erste Ende des Anschlussstücks als Tülle ausgebildet, wobei auf der Tülle üblicherweise ein flacher Dichtungsring angeordnet ist.

Die Wasserleitung (Schlauchleitung) 2 ist auf das zweite Ende 3.2 des nippelförmigen Anschlussstücks 3 aufgeschoben oder aufgesteckt und mittels einer plastisch umformbaren Presshülse 5 kraftschlüssig sowie wasserdicht mit dem Anschlussstück 3 verbunden. Das mit der Wasserleitung 2 verbundene Ende 3.2 des Anschlussstücks kann auch als Schlauchstutzen oder Schlauchnippel bezeichnet werden. Dieses Ende 3.2 des Anschlussstücks hat an seiner Außenseite, wie an sich bekannt, ein Sägezahnprofil 3.21, das nach dem plastischen Zusammenpressen der Presshülse 5 zusätzlich eine formschlüssige Verbindung zwischen dem Anschlussstück 3 und der verformbaren Schlauchleitung bewirkt.

Des Weiteren umfassen aus dem Stand der Technik bekannte Vorrichtungen der in den Figuren 1a bis 1c gezeigten Art ein Befestigungselement 6 zur Befestigung des Anschlussstücks 3 an der Armatur bzw. dem Bauteil 1, wobei an dem Befestigungselement mindestens ein hinter den Anschlag (Bund oder Flansch) 3.3 greifender Vorsprung 6.1 ausgebildet ist. Der Vorsprung 6.1 ist vorzugsweise als umlaufender, radial einwärts gerichteter Vorsprung ausgebildet. Der Anschlag 3.3 definiert eine Anschlagsfläche 3.31, die bei der Befestigung des Anschlussstücks 3 an dem Bauteil 1 mit einer Sitzfläche 1.11 des Bauteils 1 zusammenwirkt, indem sie eine Position des Anschlussstücks 3 relativ zu dem Bauteil 1 definiert.

Das Befestigungselement 6 ist in den hier gezeigten Beispielen als Überwurfmutter 6' ausgeführt. Dementsprechend weist der Anschlussstutzen 1.1 der Armatur bzw. des Bauteils 1 ein zu dem Innengewinde 6.2 der Überwurfmutter passendes Außengewinde 1.12 auf. In Fig. 1a ist die Überwurfmutter 6' durch gestrichelte Kantenlinien lediglich angedeutet. Die Überwurfmutter 6' hat beispielsweise eine im Wesentlichen kreiszylindrische Umfangsfläche, die eine gerändelte Oberfläche aufweist.

Das mit der Wasserleitung 2 zu verbindende Ende 3.2 des Anschlussstücks 3 hat zwischen dem Sägezahnprofil 3.21 und dem in Form eines Bundes oder Flansches ausgebildeten Anschlag 3, welcher von der Überwurfmutter 6' hintergriffen wird, einen von dem Anschlag 3 axial beabstandeten radialen Vorsprung 3.4. Der Vorsprung 3.4 dient als axialer Anschlag für die auf das Anschlussstück 3 aufgeschobene Wasserleitung 2 und/oder als Formschlusselement zur axialen Festlegung der plastisch umgeformten Presshülse 5. Der Vorsprung 3.4 ist vorzugsweise als umlaufender Vorsprung, beispielsweise in Form einer umlaufenden Rippe ausgebildet.

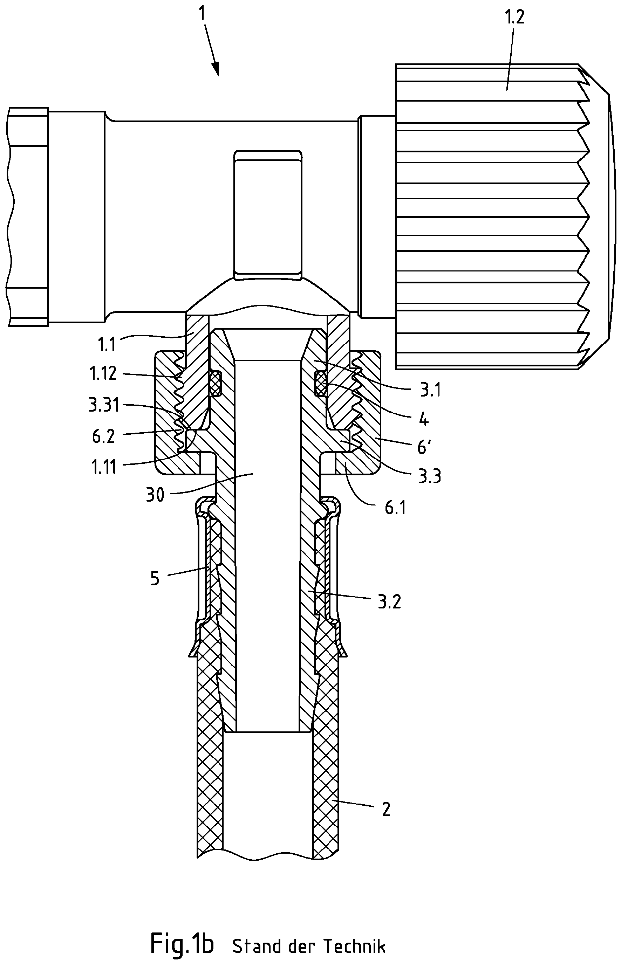

Wie in den Figuren 1a und 1b gezeigt, wird das mit der Wasserleitung 2 verbundene Anschlussstück 3 zusammen mit dem Dichtungsring (O-Ring) 4 in den Anschlussstutzen 1.1 der Armatur bzw. des Bauteils 1 eingesteckt. Die Überwurfmutter 6' wird auf das Außengewinde 1.12 des Anschlussstutzens 1.1 aufgeschraubt und fest angezogen. Die Überwurfmutter 6' verhindert somit, dass das Anschlussstück 3 beispielsweise durch in dem Anschlussstutzen 1.1 herrschenden Wasserdruck aus dem Anschlussstutzen herausgedrückt wird. Hierzu ist an dem Anschlussstück 3 der umlaufende Bund als Anschlag (3.3) ausgebildet.

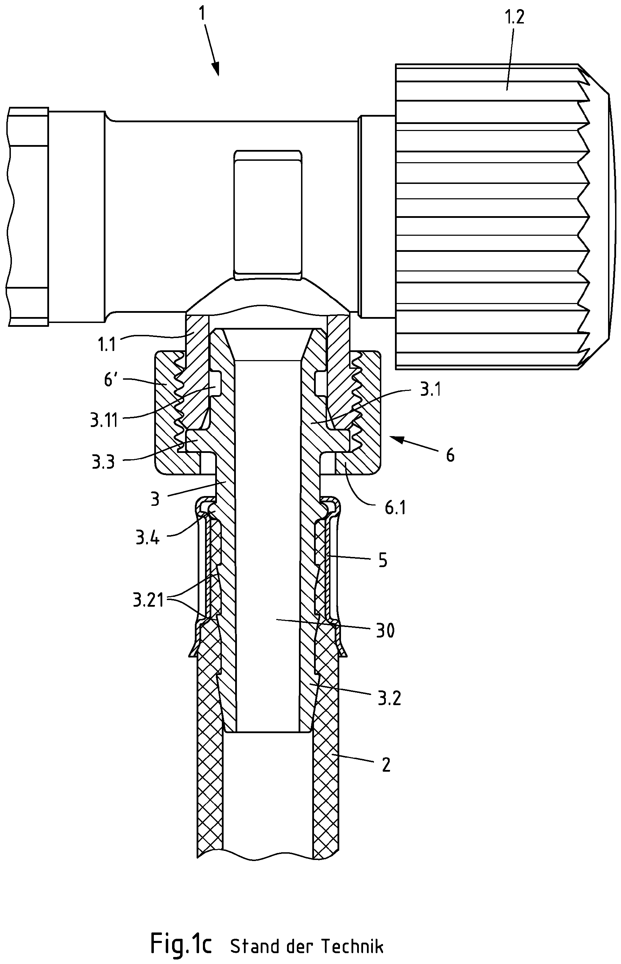

In der Praxis hat sich ergeben, dass in einigen Montagefällen Anschlussvorrichtungen der in den Figuren 1a und 1b ohne O-Ring oder mit beschädigtem O-Ring 4 montiert wurden. Die Installateure haben dabei die Überwurfmutter 6' mitunter sehr fest angezogen, sodass der Bund (Anschlag 3.3) des aus Kunststoff hergestellten Anschlussstücks 3 auf der Sitzfläche (Stirnfläche) 1.11 des Anschlussstutzens 1.1 der aus Messing hergestellten Armatur bzw. des Bauteils 1 kurzzeitig abdichten konnte. Eine solche Verbindung ohne O-Ring, wie sie in Fig. 1c gezeigt ist, ist jedoch nicht dauerhaft wasserdicht. Es wurde festgestellt, dass aus der ohne O-Ring 4 hergestellten Verbindung nach einiger Zeit Wasser tropfte oder sogar spritzte. Durch diese fehlerhaften Verbindungen sind Wasserschäden in Gebäuden entstanden.

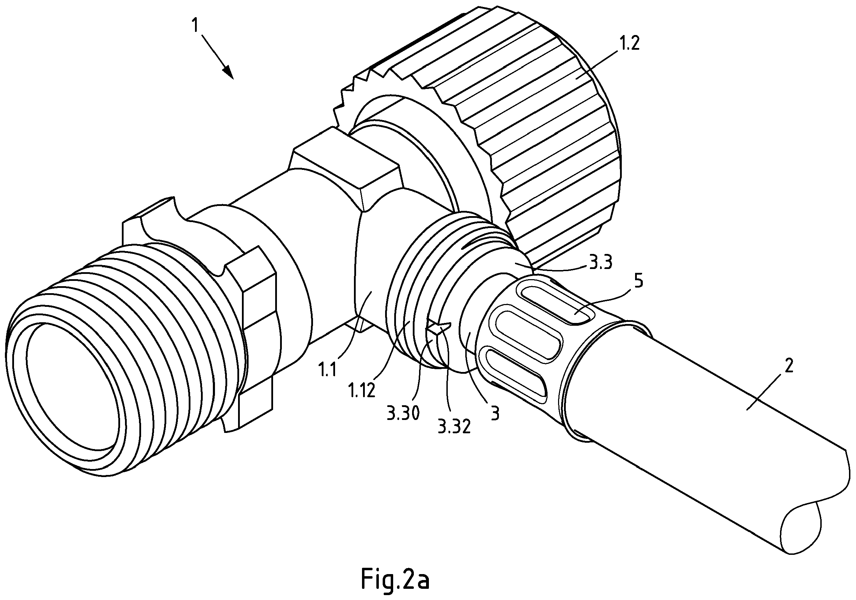

In den Figuren 2a bis 7 sind mehrere Ausführungsbeispiele der erfindungsgemäßen Vorrichtung dargestellt, die jeweils dadurch gekennzeichnet sind, dass der als Bund oder Flansch ausgeführte Anschlag 3.3 oder die dem Anschlag 3.3 zugewandte Sitzfläche 1.11 der Armatur bzw. des einen Durchgang aufweisenden Bauteils 1 mindestens eine Ausnehmung 3.32, 3.33, 3.34 oder 1.111 oder mindestens eine Erhebung 3.35 oder 1.112 aufweist, mittels der ein ringförmig-geschlossener Flächenkontakt zwischen der Anschlagsfläche 3.31 des Anschlags 3.3 und der Sitzfläche 1.11 unterbrochen oder verhindert wird. Hierdurch wird erreicht, dass die Verbindung von Anschlussstück 3 und Sanitärarmatur 1 bei fehlendem oder beschädigten Dichtungsring, der beispielsweise als flacher Dichtungsring (Ringscheibendichtung) oder O-Ring 4 ausgeführt sein kann, unmittelbar und dauerhaft undicht ist, damit die permanente Undichtigkeit und somit das Fehlen bzw. die Schadhaftigkeit des Dichtungsrings bereits bei Inbetriebnahme der Armatur bzw. des Bauteils 1 durch das unmittelbare Austreten von Leckagewasser sofort oder möglichst früh auffällt.

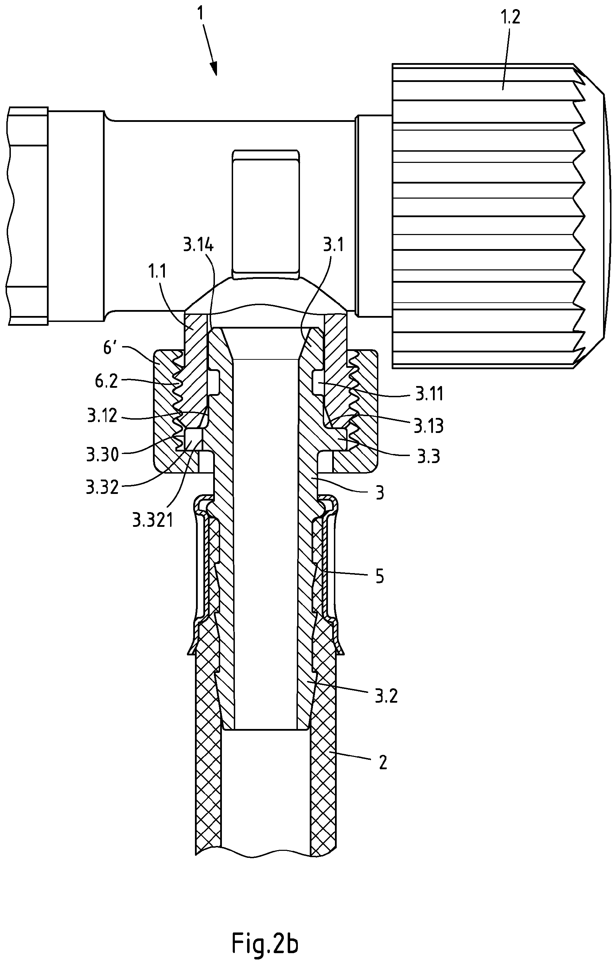

In Fig. 2a und Fig. 2b ist ein erstes Ausführungsbeispiel der Erfindung dargestellt. Der besseren Übersichtlichkeit wegen ist die Überwurfmutter 6' in Fig. 2a nicht gezeigt; sie ist jedoch in Fig. 2b in einer axialen Teilschnittansicht gezeigt. Bei diesem Ausführungsbeispiel ist in dem als Bund oder Flansch ausgeführten Anschlag 3.3 eine Ausnehmung 3.32 in Form eines Spaltes ausgebildet. Der Spalt 3.32 erstreckt sich ausgehend von der Außenkante 3.30 des Anschlags 3.3 radial in Richtung der umlaufenden Außenfläche 3.12 des in den Anschlussstutzen 1.1 der Armatur bzw. des Bauteils (Eckventil) 1 eingesteckten Endes 3.1 des Anschlussstücks 3, wobei der Spalt 3.32 mit radialem Abstand zu der Außenfläche 3.12 endet. Die Außenfläche 3.12 definiert mit dem Anschlag 3.3 eine Kehle 3.13, wobei der radiale Abstand des Spaltes 3.32 von der Außenfläche 3.12 weniger als 3 mm, vorzugsweise weniger als 2 mm, besonders bevorzugt weniger als 1 mm beträgt. Es liegt jedoch auch im Rahmen der Erfindung den Spalt 3.32 so tief auszubilden, dass er unmittelbar, d. h. ohne Abstand, an der Außenfläche 3.12 endet.

Das nippelförmige Anschlussstück 3 hat am Außenumfang seines einzusteckenden Stirnendes eine umlaufende Fase 3.14. Der dem Anschlussstück 3 zugeordnete Anschlussstutzen 1.1 der Armatur bzw. des Bauteils 1 mündet an der dem Anschlag 3.3 zugewandten Sitzfläche 1.11, wobei die durch den Anschlussstutzen 1.1 definierte Aufnahme einen im Wesentlichen kreiszylindrischen Innenabschnitt aufweist, in den der einzusteckende, im Wesentlichen kreiszylindrische Axialabschnitt (Stecknippel) des Anschlussstücks 3 mit der Ringnut 3.11 für den Dichtungsring aufgenommen wird. An den kreiszylindrischen Innenabschnitt des Anschlussstutzens 1.1 schließt sich in Richtung der Sitzfläche 1.11 ein konisch zunehmender Mündungsabschnitt 1.13 an. In Fig. 2b ist zu erkennen, dass der in dem Bund (Anschlag 3.3) ausbildete Spalt (Ausnehmung 3.32) mit dem Mündungsabschnitt 1.13 des Anschlussstutzens 1.1 teilweise in Überdeckung liegt, sodass ein ringförmig-geschlossener Flächenkontakt zwischen der Anschlagsfläche 3.31 des Bundes und der Sitzfläche 1.11 des Anschlussstutzens 1.1 unterbrochen ist.

In Fig. 2a ist zu erkennen, dass sich der Spalt (Ausnehmung 3.32) über die gesamte axiale Dicke des Anschlags 3.3 erstreckt. Der Spalt weist beispielsweise ein V-förmiges oder U-förmiges Querschnittsprofil auf. Ferner kann der Spalt einen abgeflachten Spaltgrund aufweisen. Der Spalt kann in Umfangsrichtung des als Bund ausgeführten Anschlages 3.3 auch deutlich breiter ausgeführt sein als es in Fig. 2a gezeigt ist. Beispielsweise kann die in Umfangsrichtung des Bundes gemessene Breite des Spaltes am Spaltgrund 3.321, d.h. an der tiefsten Stelle des Spaltes, im Bereich von 2 mm bis 6 mm liegen. Auch größere Spaltbreiten sind möglich.

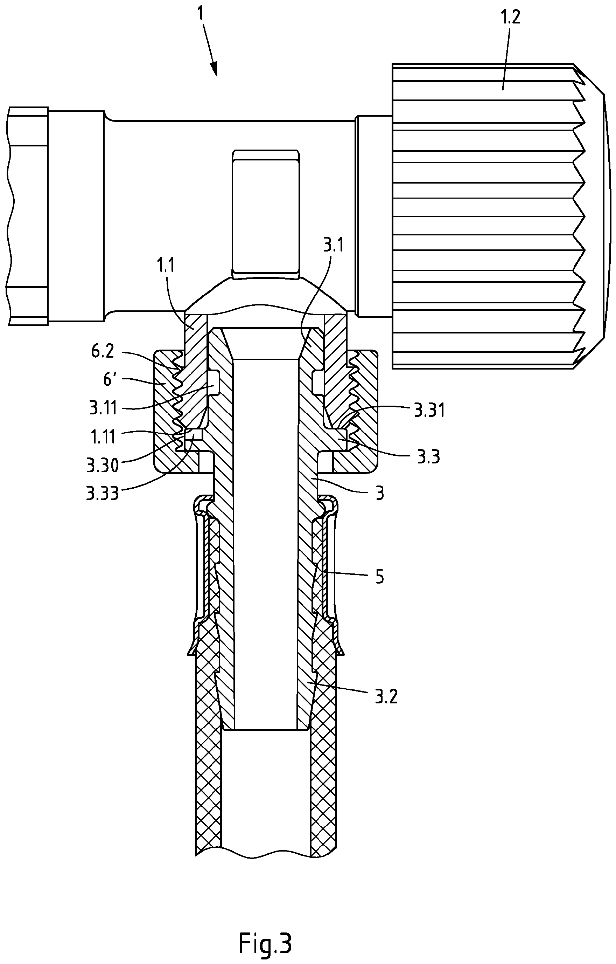

Das in Fig. 3 gezeigte Ausführungsbeispiel der Erfindung unterscheidet sich von dem in den Figuren 2a und 2b gezeigten Ausführungsbeispiel dadurch, dass sich der mindestens eine Spalt bzw. die mindestens eine Ausnehmung 3.33 nicht über die gesamte axiale Dicke des Anschlags 3.3 erstreckt. Bei dem in Fig. 3 gezeigten Ausführungsbeispiel ist die mindestens eine Ausnehmung 3.33 in Form einer Nut in der der Sitzfläche 1.11 der Armatur bzw. des Bauteils zugewandten Anschlagsfläche 3.31 des Anschlags 3.3 ausgebildet. Die Nut (Ausnehmung 3.33) erstreckt sich ausgehend vom Außenumfang 3.30 des als Bund ausgeführten Anschlags 3.3 einwärts, wobei die Nut mit radialem Abstand zu der Außenfläche 3.12 des Einsteckabschnitts des nippelförmigen Anschlussstücks 3 endet. Die Außenfläche 3.12 definiert mit dem Anschlag 3.3 wiederum eine Kehle 3.13, wobei der radiale Abstand der Nut von der Außenfläche 3.12 weniger als 3 mm, vorzugsweise weniger als 2 mm, besonders bevorzugt weniger als 1 mm beträgt. Es liegt jedoch auch im Rahmen der Erfindung das innere Ende der Nut (Ausnehmung 3.33) so tief auszubilden, dass sie unmittelbar, d. h. ohne Abstand, an der Außenfläche 3.12 endet.

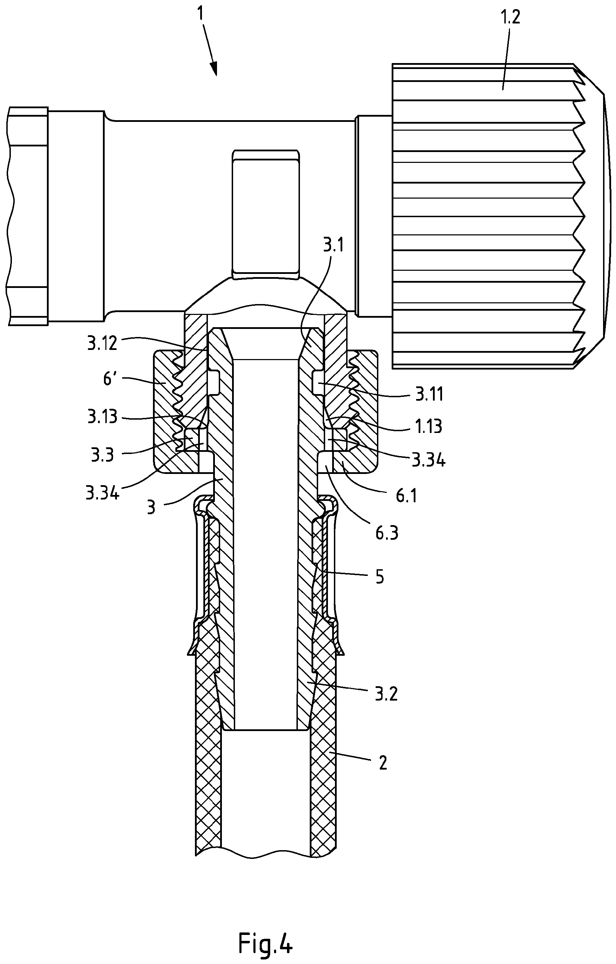

In Fig. 4 ist ein drittes Ausführungsbeispiel der Erfindung dargestellt. Dieses Beispiel unterscheidet sich von den in den Figuren 2a, 2b und 3 gezeigten Beispielen dadurch, dass die mindestens eine Ausnehmung 3.34 in dem Anschlag (Bund) 3.3 in Form eines Durchgangslochs ausgebildet ist, das sich über die gesamte axiale Dicke des Anschlags 3.3 erstreckt. In Fig. 4 sind zwei solche Ausnehmungen 3.34 zu erkennen. Die beiden Durchgangslöcher (Ausnehmungen 3.34) sind beispielsweise in Form von Bohrungen ausgebildet und um ca. 180° voneinander beabstandet in dem Bund (3.3) angeordnet.

Das Durchgangsloch (3.34) kann unmittelbar oder mit radialem Abstand an der umlaufenden Außenfläche 3.12 des ersten Endes 3.1 des Anschlussstücks 3 angrenzen, wobei diese Außenfläche 3.12 mit dem Bund eine neben dem Durchgangsloch liegende Kehle 3.13 definiert. In dem in Fig. 4 gezeigten Beispiel grenzt das Durchgangsloch (3.34) nahezu unmittelbar an der umlaufenden Außenfläche 3.12 des ersten Endes 3.1 des Anschlussstücks 3 an. Das Durchgangsloch (3.34) fluchtet mit dem konisch zunehmenden Mündungsabschnitt 1.13 des Anschlussstutzens 1.1 sowie mit der hinteren Öffnung 6.3 der Überwurfmutter 6', die durch den umlaufenden Vorsprung (Steg) der Überwurfmutter 6' begrenzt ist.

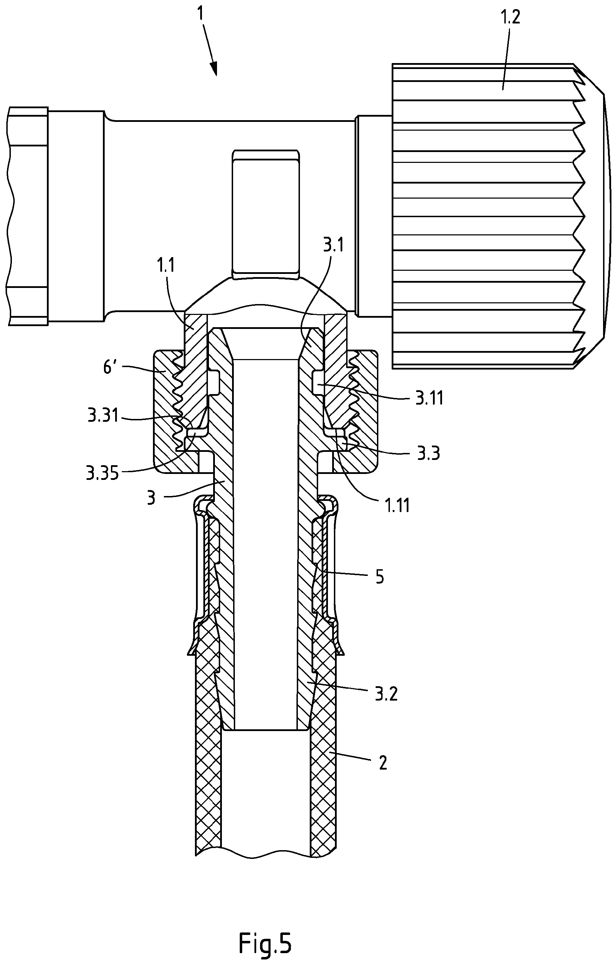

In Fig. 5 ist ein viertes Ausführungsbeispiel der Erfindung dargestellt. Dieses Beispiel unterscheidet sich von den in den Figuren 2a, 2b, 3 und 4 gezeigten Beispielen dadurch, dass der als Bund ausgebildete Anschlag 3.3 mindestens eine Erhebung 3.35 aufweist, mittels der ein ringförmig-geschlossener Flächenkontakt zwischen der Anschlagsfläche 3.31 des Anschlags 3.3 und der Sitzfläche 1.11 des Anschlussstutzens 1.1 der Armatur bzw. des Bauteils 1 unterbrochen oder verhindert wird. Die mindestens eine Erhebung 3.35 ist auf der der Armatur bzw. des Bauteils 1 zugewandten Anschlagsfläche 3.31 des Anschlags 3.3 ausgebildet. Die Erhebung 3.35 ist beispielsweise in Form mindestens einer Rippe oder Verdickung ausgeführt. Vorzugsweise ist die Erhebung 3.35 länglich ausgebildet und erstreckt sich auf dem umlaufenden Anschlag 3.3 radial.

In Fig. 5 sind zwei solche Erhebungen 3.35 zu erkennen. Die beiden Erhebungen 3.35 sind beispielsweise in Form von sich radial auf dem Bund (3.3) erstreckenden Rippen ausgebildet, die voneinander um ca. 180° beabstandet auf dem Bund (3.3) ausgebildet sind. Leckagewasser, das aufgrund eines in der Ringnut 3.11 fehlenden O-Rings aus dem Stecksitz austritt, fließt entlang der Rippen (3.35) zu dem Innengewinde 6.2 der Überwurfmutter 6' und durch den Gewindegang entlang des Außengewindes 1.12 des Anschlussstutzens 1.1 nach außen, wo es bei Inbetriebnahme der Armatur bzw. des Bauteils 1 wahrgenommen werden kann.

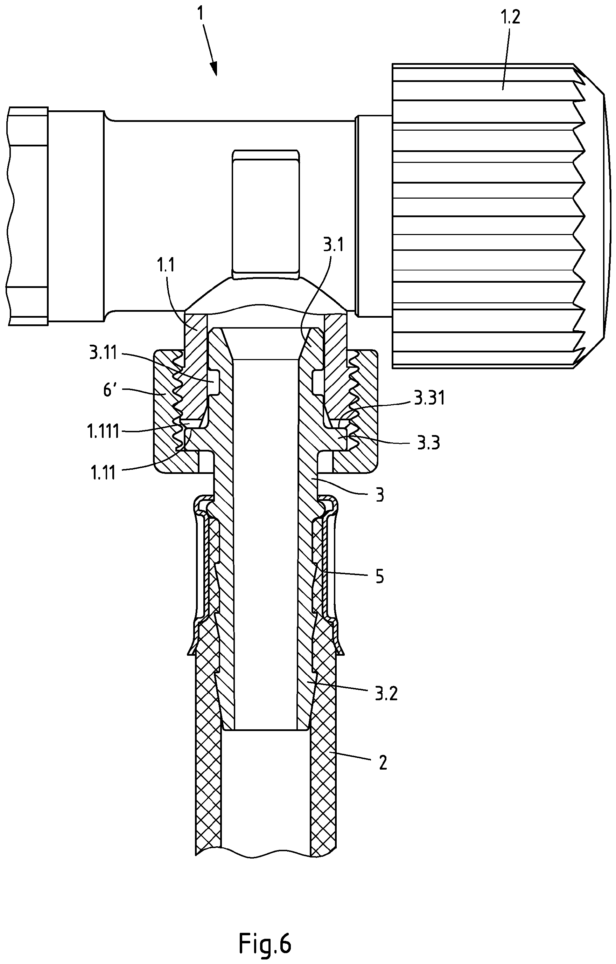

In Fig. 6 ist ein fünftes Ausführungsbeispiel der Erfindung dargestellt. Dieses Beispiel unterscheidet sich von den in den Figuren 2a, 2b, 3, 4 und 5 gezeigten Beispielen dadurch, dass die dem Anschlag 3.3 zugewandte Sitzfläche 1.11 des Anschlussstutzens 1.1 der Armatur bzw. des Bauteils 1 mindestens eine Ausnehmung 1.111 aufweist, mittels der ein ringförmig-geschlossener Flächenkontakt zwischen der Anschlagsfläche 3.31 des Anschlags 3.3 und der Sitzfläche 1.11 des Anschlussstutzens 1.1 unterbrochen oder verhindert wird. Die mindestens eine Ausnehmung 1.111 ist in der Sitzfläche 1.11 ausgebildet, welcher der Anschlagsfläche 3.31 des als Bundes ausgeführten Anschlags 3.3 zugewandt ist.

In Fig. 6 sind zwei solche Ausnehmungen 1.111 zu erkennen. Die Ausnehmungen 1.111 sind beispielsweise in Form von Nuten ausgebildet, die sich in der Sitzfläche 1.11 des Anschlussstutzens 1.1 radial erstrecken und voneinander beispielsweise um ca. 180° beabstandet sind.

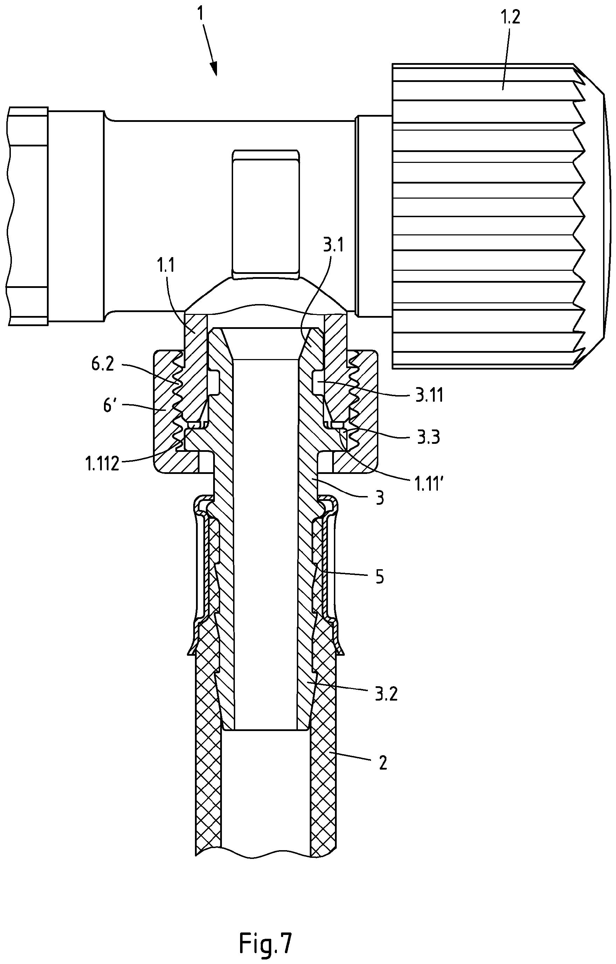

In Fig. 7 ist ein sechstes Ausführungsbeispiel der Erfindung dargestellt. Dieses Beispiel unterscheidet sich von den in den Figuren 2a, 2b und 3 bis 6 gezeigten Beispielen dadurch, dass die dem Anschlag (Bund) 3.3 zugewandte Sitzflächenseite 1.11' des Anschlussstutzens 1.1 der Armatur bzw. des Bauteils 1 mindestens eine Erhebung 1.112 aufweist, mittels der ein ringförmig-geschlossener Flächenkontakt zwischen der Anschlagsfläche 3.31 des Anschlags 3.1 und der Sitzfläche des Anschlussstutzens 1.1 unterbrochen oder verhindert wird.

In Fig. 7 sind zwei solche Erhebungen 1.112 zu erkennen. Die Erhebungen 1.112 sind beispielsweise in Form von zinnen- oder zahnförmigen Vorsprüngen ausgebildet, die an der Stirnseite des Anschlussstutzens 1.1 axial vorstehen.

## Patentansprüche

1. Vorrichtung zum Anschluss einer Wasserleitung (2) an einem einen Durchgang aufweisenden Bauteil (1), insbesondere einer Armatur zum Verändern und/oder Steuern eines Wasserstroms,
mit einem einen Durchgangskanal (30) zur Durchleitung von Wasser in Richtung Bauteil (1) aufweisenden Anschlussstück (3),
wobei das Anschlussstück (3) ein mit dem Bauteil zu verbindendes erstes Ende (3.1), ein mit der Wasserleitung (2) zu verbindendes zweites Ende (3.2) und einen zwischen dem ersten Ende (3.1) und dem zweiten Ende (3.2) ausgebildeten nach außen vorstehenden Anschlag (3.3) in Form eines Bundes oder Flansches aufweist,
wobei das erste Ende (3.1) des Anschlussstücks (3) auf seiner Außenseite mit einer Ringnut (3.11) versehen oder als Tülle zur Aufnahme eines Dichtungsrings (4) ausgebildet ist,
wobei in der Ringnut (3.11) oder auf der Tülle vorzugsweise ein Dichtungsring (4) angeordnet ist, und
mit einem Befestigungselement (6, 6') zur Befestigung des Anschlussstücks (3) an dem Bauteil (1), wobei an dem Befestigungselement (6, 6') mindestens ein hinter den Anschlag (3.3) greifender Vorsprung (6.1) ausgebildet ist,
wobei der Anschlag (3.3) eine Anschlagsfläche (3.31) definiert, die bei der Befestigung des Anschlussstücks (3) an dem Bauteil (1) mit einer Sitzfläche (1.11) des Bauteils (1) zusammenwirkt, indem sie eine Position des Anschlussstücks (3) relativ zu dem Bauteil (1) definiert,
**dadurch gekennzeichnet, dass** der Anschlag (3.3) oder die dem Anschlag (3.3) zugewandte Sitzfläche (1.11) des Bauteils (1) mindestens eine Ausnehmung (3.32, 3.33, 3.34; 1.111) oder Erhebung (3.35; 1.112) aufweist, mittels der ein ringförmig-geschlossener Flächenkontakt zwischen der Anschlagsfläche (3.31) des Anschlags (3.3) und der Sitzfläche (1.11) des Bauteils (1) unterbrochen oder verhindert wird.

2. Vorrichtung nach Anspruch 1, **dadurch gekennzeichnet, dass** die Ausnehmung (3.32, 3.33) in dem Anschlag (3.3) ausgebildet ist, wobei die Ausnehmung (3.32, 3.33) in Form eines Spaltes ausgebildet ist, der sich ausgehend von einer Außenkante (3.30) des Anschlags (3.3) bis zu einer umlaufenden Außenfläche (3.12) des ersten Endes (3.1) des Anschlussstücks (3) erstreckt oder mit radialem Abstand zu dieser Außenfläche (3.12) endet, wobei diese Außenfläche (3.12) mit dem Anschlag (3.3) eine Kehle (3.13) definiert, und wobei der gegebenenfalls vorhandene radiale Abstand weniger als 3 mm, vorzugsweise weniger als 2 mm, besonders bevorzugt weniger als 1 mm beträgt.

3. Vorrichtung nach Anspruch 2, **dadurch gekennzeichnet, dass** sich der Spalt über die gesamte axiale Dicke des Anschlags (3.3) erstreckt.

4. Vorrichtung nach Anspruch 2 oder 3, **dadurch gekennzeichnet, dass** der Spalt ein V-förmiges oder U-förmiges Querschnittsprofil und/oder einen abgeflachten Spaltgrund (3.321) aufweist.

5. Vorrichtung nach einem der Ansprüche 1 bis 4, **dadurch gekennzeichnet, dass** die Erhebung (3.35) auf der dem Bauteil (1) zugewandten Seite des Anschlags (3.3) ausgebildet ist.

6. Vorrichtung nach Anspruch 5 **dadurch gekennzeichnet, dass** die Erhebung (3.35) in Form mindestens einer Rippe oder Verdickung ausgebildet ist.

7. Vorrichtung nach Anspruch 5 oder 6, **dadurch gekennzeichnet, dass** die Erhebung (3.35) länglich ausgebildet ist und sich auf dem Anschlag (3.3) radial erstreckt.

8. Vorrichtung nach einem der Ansprüche 1 bis 7, **dadurch gekennzeichnet, dass** die Ausnehmung (3.34) in dem Anschlag (3.3) ausgebildet ist, wobei die Ausnehmung (3.34) in Form eines Durchgangslochs ausgebildet ist, das sich über die gesamte axiale Dicke des Anschlags (3.3) erstreckt.

9. Vorrichtung nach Anspruch 8, **dadurch gekennzeichnet, dass** das Durchgangsloch unmittelbar oder mit Abstand an einer umlaufenden Außenfläche (3.12) des ersten Endes (3.1) des Anschlussstücks (3) angrenzt, wobei diese Außenfläche (3.12) mit dem Anschlag (3.3) eine neben dem Durchgangsloch liegende Kehle (3.13) definiert, und wobei der gegebenenfalls vorhandene Abstand weniger als 3 mm, vorzugsweise weniger als 2 mm, besonders bevorzugt weniger als 1 mm beträgt.

10. Vorrichtung nach einem der Ansprüche 1 bis 9, **dadurch gekennzeichnet, dass** die Ausnehmung (1.111) in der dem Anschlag (3.3) zugewandten Sitzfläche (1.11) des Bauteils (1) ausgebildet ist, wobei die Ausnehmung (1.111) in Form einer Nut ausgebildet ist, die sich ausgehend von einem Außenumfang der Sitzfläche (1.11) einwärts bis zu einem Innenumfang der Sitzfläche (1.11) erstreckt.

11. Vorrichtung nach einem der Ansprüche 1 bis 10, **dadurch gekennzeichnet, dass** die Erhebung (1.112) auf der dem Anschlag (3.3) zugewandten Sitzflächenseite (1.11') des Bauteils (1) ausgebildet ist.

12. Vorrichtung nach einem der Ansprüche 1 bis 11, **dadurch gekennzeichnet, dass** das erste Ende (3.1) des Anschlussstücks (3) als Stecknippel ausgebildet ist.

13. Vorrichtung nach einem der Ansprüche 1 bis 12, **dadurch gekennzeichnet, dass** das Befestigungselement (6) als Überwurfmutter (6') ausgeführt ist.

14. Vorrichtung nach einem der Ansprüche 1 bis 13, **dadurch gekennzeichnet, dass** das zweite Ende (3.2) des Anschlussstücks (3) mit einer Wasserleitung (2) in Form eines Schlauchs, vorzugsweise eines Panzerschlauchs verbunden ist.

15. Vorrichtung nach einem der Ansprüche 1 bis 14, **dadurch gekennzeichnet, dass** das Bauteil (1) eine Armatur zum Verändern und/oder Steuern eines Wasserstroms, vorzugsweise ein Ventil, besonders bevorzugt ein Eckventil oder ein Füllventil für einen Spülkasten, insbesondere WC-Spülkasten ist, wobei die Sitzfläche (1.11) des Bauteils (1) vorzugsweise an der Stirnseite eines Stecksitzes zur Aufnahme des Anschlussstücks (3) ausgebildet ist.
